(19) Europäisches Patentamt / European Patent Office / Office européen des brevets

(11) **EP 4 122 705 B1**

(12) **EUROPEAN PATENT SPECIFICATION**

(45) Date of publication and mention
of the grant of the patent:
**21.02.2024 Bulletin 2024/08**

(21) Application number: **21187260.1**

(22) Date of filing: **22.07.2021**

(51) International Patent Classification (IPC):
**B32B 27/32** *(2006.01)*    **B32B 7/02** *(2019.01)*
**B32B 27/08** *(2006.01)*

(52) Cooperative Patent Classification (CPC):
**B32B 7/02; B32B 27/08; B32B 27/32;**
B32B 2250/03; B32B 2250/04; B32B 2250/05;
B32B 2250/242; B32B 2255/10; B32B 2270/00;
B32B 2307/31; B32B 2307/4023; B32B 2307/412;
B32B 2307/54; B32B 2307/558; B32B 2307/72;

(Cont.)

(54) **POLYETHYLENE FILM FOR HIGH-SPEED PRINTING SUITABLE FOR SUSTAINABLE PACKAGING**

POLYETHYLENFOLIE FÜR HOCHGESCHWINDIGKEITSDRUCK GEEIGNET FÜR NACHHALTIGE VERPACKUNGEN

FILM DE POLYÉTHYLÈNE POUR IMPRESSION À GRANDE VITESSE APPROPRIÉ POUR UN EMBALLAGE DURABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2023 Bulletin 2023/04**

(73) Proprietors:
• **Borealis AG**
**1020 Vienna (AT)**
• **Abu Dhabi Polymers Co. Ltd (Borouge) LLC**
**Abu Dhabi (AE)**

(72) Inventors:
• **DAS, Subrata Kumar**
**Abu Dhabi (AE)**
• **AL TALAFHA, Mohammad**
**Abu Dhabi (AE)**
• **SINGH, Raghvendra**
**Abu Dhabi (AE)**

(74) Representative: **Kador & Partner Part mbB**
**Corneliusstraße 15**
**80469 München (DE)**

(56) References cited:
EP-A1- 2 578 395          WO-A1-2018/187438
WO-A1-2019/005930    WO-A1-2021/070198
US-A1- 2018 104 942

(52) Cooperative Patent Classification (CPC): (Cont.)
B32B 2307/7244; B32B 2307/7246;
B32B 2307/732; B32B 2307/75; B32B 2439/00

**Description**

The present invention relates to a polyethylene multilayered film comprising an inner layer I, an outer layer O and a core layer C. Furthermore, the invention relates to a laminate and an article comprising the film, and to the use of the laminate or film for packaging of an article.

Polyethylene films are widely used in flexible packaging, such as laminates, stand-up pouches, detergent pouches, sachets, etc. and depending on the application, a variety of properties may be needed in terms of pack integrity and/or attractiveness. In the majority of applications, polyethylene (PE) films have excellent sealing performance, however they also suffer from comparatively inferior stiffness, why common non-oriented PE films are usually not suitable for high-speed printing operations. A "stretched" PE film in the longitudinal direction or machine direction (often referred to as "MDO" film) is improved in terms of stiffness, but availability of such films is limited. Thus, the majority (more than 98%) of available PE films are non-oriented PE films and those films are used in all flexible packaging applications. Furthermore, due to the fact that non-oriented PE films have lower film stiffness in general, they only find limited acceptance for use in latest high speed machines, specifically in rotogravure printing. They always face challenges and are run at lower printing speed to achieve the desired printing quality.

It is generally challenging to maintain the print quality with non-oriented PE films for reverse rotogravure printing when the print speed reaches more than 200 meters/min. Thus, there is a steady need to improve the performance of non-oriented PE films on high speed rotogravure printing machines to be run at least at 250 meters/min, for better productivity and efficiency of the printing operations. To achieve superior print quality and for running the PE film on high speed printing line, further film formulations and structures are desired, for films of very low thickness but still sufficient stiffness.

WO 2018/187438 describes a laminate structure for packaging comprising a sealant film and a layered print film with a thickness from 15 to 30 microns. The middle layer of print film comprises at least 90% by weight high density polyethylene (HDPE) having a density from 0.950 to 0.965 g/cc and a melt index (I2) from 0.1 to 20 g/10 min, and both the inner and outer layer comprise linear low density polyethylene (LLDPE) having a density from 0.925 to 0.965 g/cc. No details on the SIT, optical properties and mechanical properties are disclosed in this publication, neither for the print film nor for the laminated film.

EP 2 578 395 A1 discloses stiff and direct printable polyethylene label films comprising a core layer sandwiched by two stiff tie layers and two printable skin layers. The core layer composition comprises a blend of HDPE and LLDPE or LDPE.

WO 2021/070198 A1 discloses packaging materials, specifically lamitubes, comprising a three-layer film structure adhesively laminated to a heat-sealable layer. The layers of the three-layer film are all blends of HDPE and MOPE.

US 2018/104942 A1 discloses multilayer polyethylene films comprising a core layer and two outer layers that can be used as a packaging material.

WO 2019/005930 A1 discloses laminated structures used as packaging that comprise a print film which has a three-layer structure where the core layer is made completely from a HDPE.

It is therefore an object of the present invention to provide PE films, which are preferably non-oriented and which have the required stiffness and other mechanical properties and heat resistance as required for high-speed printing operations. It is preferably desired to provide PE films for further enhancement of the print performance on high speed rotogravure printing operations.

It is a further object of the present invention to provide PE films with good barrier properties (mainly water vapor and/or oxygen barrier), which are required for the intended use of the films in packaging applications.

It is a still further object of the present invention to provide PE films, which also suffice the aesthetic requirements addressed on films in packaging applications and have good optical properties (e.g. gloss and haze).

The combination of these objects is achieved by the present invention, which provides a polyethylene multilayered film comprising, or consisting of, an inner layer I, an outer layer O and a core layer C, wherein the core layer C is located between the inner layer I and the outer layer O; and wherein

a) the inner layer I is made of an inner layer composition comprising 45 to 75 wt.% of a component AI, based on the total weight of the inner layer composition, wherein the component AI is an ethylene polymer having a density of above 925 kg/m$^3$ up to 940 kg/m$^3$ and a melt flow rate (MFR$_2$) in the range of 0.5 to 2.0 g/10 min, determined according to ISO 1133;

b) the core layer C is made of a core layer composition comprising less than 90 wt.%, preferably 50 to 85 wt.%, of a component AC, based on the total weight of the core layer composition, wherein the component AC is a high density polyethylene having a density in the range of 950 to 970 kg/m$^3$ and a melt flow rate (MFR$_2$) in the range of 0.2 to 2.0 g/10 min, determined according to ISO 1133; and

c) the outer layer O is made of an outer layer composition comprising a component AO, wherein the component AO is an ethylene polymer having a density of above 925 kg/m$^3$ up to 940 kg/m$^3$ and a melt flow rate (MFR$_2$) in the

range of 0.5 to 2.0 g/10 min, determined according to ISO 1133.

The present invention is based on the finding that such polyethylene multilayered films, which can be used as a packaging material, can be provided by a film comprising a core layer, an inner layer and an outer layer, wherein the layers comprise a specifically selected high density ethylene polymer in the core layer and specifically selected ethylene polymers in the inner layer and outer layer.

The combination of the core layer C, inner layer I and outer layer O of the polyethylene multilayered films according to the present invention solves the above objects.

In particular, the films according to the present invention have good mechanical properties without requiring the film to be oriented, such as high stiffness expressed by their very good tensile modulus which is a mandatory requirement for high speed printable films. Particularly, the films are expected to withstand high winding tensions during printing operations such as the for example during the high speed rotogravure printing process. The films thus enable the production of printed films using high speed printing processes.

Furthermore, the films have higher heat resistance and particularly exhibit superior seal initiation temperatures as compared to the majority of conventional LLDPE films having a heat seal initiation temperature at 5 N (SIT) in the range of 91 to 101 °C. Thus, the films may easily be run on high speed printing machines and subsequent form, fill and seal machines.

Although it is quite challenging to increase the heat resistance of PE films, while maintaining good optical properties, the films are also characterized by relatively high gloss and low haze. Moreover, the films show improved barrier properties such as improved moisture and oxygen barrier. Thus, the polyethylene multilayer films according to the present invention combine all properties desired for printable films for use in different packaging applications.

In the present invention the polyethylene multilayer film comprises, or consists of, an inner layer I, an outer layer O and a core layer C, wherein the core layer C is located between the inner layer I and the outer layer O.

## Core Layer C

The core layer C of the film is made of a core layer composition comprising components, which particularly contribute to stiffness of the film necessary for film extrusion processes and further for printing operations, in particular high-speed printing operations.

## Component AC

The core layer C is made of a core layer composition comprising less than 90 wt.%, preferably 50 to 85 wt.%, of a component AC, based on the total weight of the core layer composition, wherein the component AC is a high density polyethylene having a density in the range of 950 to 970 kg/m$^3$ and a melt flow rate (MFR$_2$) in the range of 0.2 to 2.0 g/10 min, determined according to ISO 1133.

In particular, the component AC provides the required strength and stiffness to the core layer C.

The component AC is a high density polyethylene (HDPE). HDPEs are well known in the art and are usually produced in polymerization processes using a catalyst.

Polyethylenes generally can be unimodal or multimodal, for example bimodal. By the "modality" of a polymer is meant the structure of the molecular weight distribution of the polymer, i.e. the appearance of the curve indicating the number of molecules as a function of the molecular weight. If the curve exhibits one maximum, the polymer is referred to as "unimodal", whereas if the curve exhibits a very broad maximum or two or more maxima and the polymer consists of two or more fractions, the polymer is referred to as "bimodal", "multimodal" etc. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the production of unimodal polyethylene, an ethylene polymer is produced in a reactor under certain conditions with respect to monomer composition, hydrogen gas pressure, temperature, pressure, and so forth. As comonomer, use is commonly made of other olefins having up to 12 carbon atoms, such as alpha-olefins having 3-12 carbon atoms, e.g. propene, 1-butene, 4-methyl-1-pentene, 1-hexene, 1-octene, 1-decene, etc., in the copolymerization of ethylene.

In the production of for example a bimodal polyethylene, a first ethylene polymer is produced in a first reactor under certain conditions with respect to monomer composition, hydrogen gas pressure, temperature, pressure, and so forth. After the polymerization in the first reactor, the reaction mixture including the polymer produced is fed to a second reactor, where further polymerization takes place under other conditions. Usually, a first polymer of high melt flow rate (low molecular weight) and with a moderate or small addition of comonomer, or no such addition at all, is produced in the first reactor, whereas a second polymer of low melt flow rate (high molecular weight) and with a greater addition of comonomer is produced in the second reactor. The resulting end product consists of an intimate mixture of the polymers from the two reactors, the different molecular weight distribution curves of these polymers together forming a molecular weight distribution curve having a broad maximum or two maxima, i.e. the end product is a bimodal polymer mixture.

The HDPE of component AC preferably is a multimodal HDPE, more preferably a bimodal HDPE.

The HDPE of component AC preferably has a density of 955 to 968 $kg/m^3$, more preferably of 958 to 965 $kg/m^3$. Such multimodal HDPE and their production are, for example, described in WO 2020/109289, p. 19 to 28, to which it is referred.

Preferably, the HDPE is a copolymer. An ethylene copolymer is a polymer which comprises ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the HDPE is a copolymer of ethylene and 1-butene, 1-hexene or 1-octene, most preferably is a copolymer of ethylene and 1-butene.

Preferably, the total amount of comonomers present in the HDPE is of 0.0 to 0.40 mol%, more preferably of 0.01 to 0.30 mol% and most preferably 0.02 to 0.20 mol%.

Preferably, the HDPE of component AC has an $MFR_2$ of 0.25 to 1.8 g/10min, more preferably 0.3 to 1.5 g/10min, still more preferably 0.4 to 1 g/10 min and most preferably 0.5 to 0.9 g/10min.

In a particularly preferred embodiment, the HDPE of component AC has an $MFR_2$ of 0.5 to 0.9 g/10 min, and/or an $MFR_5$ of 2.0 to 3.5 g/10 min, and/or an $MFR_{21}$ of 30 to 50 g/10 min, and/or a density of 958 to 965 $kg/m^3$, and/or a molecular weight distribution (MWD) of 10 to 15, and/or an $M_n$ of 7 to 12 kg/mol, and/or an $M_w$ of 100 to 165 kg/mol, and/or an $MFR_{21}/MFR_2$ ratio ($FRR_{21/2}$) of 50 to 75, and/or an $MFR_{21}/MFR_5$ ratio ($FRR_{21/5}$) of 10 to 25. All molecular weight parameters are determined by the GPC conventional method in standard calibration as further described in detail below.

As the HDPE of component AC, resin Borstar FB5600 as produced by Borouge may be used.

The component AC is present in the core layer composition in an amount of less than 90 wt.%, preferably in an amount of 50 to 89 wt.%, more preferably 60 to 88 wt.% and most preferably 70 to 85 wt.%, based on the total weight of the core layer composition.

In addition to the component AC, the core layer composition may comprise further components, which are different from the component AC.

*Component BC*

The core layer composition may further comprise a component BC. Preferably, the component BC is an ethylene polymer having a density of above 925 $kg/m^3$ up to 940 $kg/m^3$ and a melt flow rate ($MFR_2$) in the range of 0.5 to 2.0 g/10 min, determined according to ISO 1133.

Preferably, the component BC is a multimodal ethylene terpolymer, more preferably a bimodal ethylene terpolymer.

Preferably, the multimodal terpolymer comprises, or consists of, a multimodal polymer of ethylene with at least two different comonomers selected from alpha-olefins having from 4 to 10 carbon atoms, which has a ratio $MFR_{21}/MFR_2$ of 13 to 30 and an MWD of 6 or less.

Such multimodal ethylene terpolymers are disclosed, for example, in WO 2016/083208.

The multimodal ethylene terpolymer preferably has an $MFR_2$ in the range of from 0.5 to 2.5 g/10min, and particularly preferred 1.0 to 1.8 g/10min. Preferably, the multimodal ethylene terpolymer has a density of above 925 to 933 $kg/m^3$, more preferably of 925.5 to 930 $kg/m^3$. Multimodal ethylene terpolymer preferably has a ratio $MFR_{21}/MFR_2$ of 13 to 30, more preferably of 15 to 25.

The at least two alpha-olefin comonomers having from 4 to 10 carbon atoms of multimodal ethylene terpolymer are preferably 1-butene and 1-hexene. Preferably, the total amount of comonomers present in the multimodal ethylene terpolymer is of 0.5 to 10 mol%, preferably of 1.0 to 8 mol%, more preferably of 1.0 to 5 mol%, more preferably of 1.1 to 4.0 mol%.

The multimodal ethylene terpolymer, which preferably is a bimodal terpolymer, preferably comprises, or consists of, an ethylene polymer component (A) and an ethylene polymer component (B), wherein the ethylene polymer component (A) has higher $MFR_2$ than the ethylene polymer component (B).

More preferably, the ethylene polymer component (A) has an $MFR_2$ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the $MFR_2$ of ethylene polymer component (A) to the $MFR_2$ of the ethylene polymer component (B) is 2 to 50, preferably 5 to 40, more preferably 10 to 30, even more preferably 10 to 25, and still more preferably 11 to 25.

Preferably, the ethylene polymer component (A) comprises a different comonomer than the ethylene polymer (B). Preferably, the ethylene polymer component (A) has lower amount (mol%) of comonomer than the ethylene polymer component (B), more preferably, the ratio of [the amount (mol%) of alpha-olefin comonomer having from 4 to 10 carbon atoms comonomer present in the ethylene polymer component (A)] to [the amount (mol%) of at least two alpha-olefin comonomers having from 4 to 10 carbon atoms of the final multimodal polymer of ethylene ] is of 0.2 to 0.6, preferably of 0.25 to 0.5.

Preferably, the alpha-olefin comonomer having from 4 to 10 carbon atoms of the ethylene polymer component (A) is 1-butene and the alpha-olefin comonomer having from 4 to 10 carbon atoms of the ethylene polymer component (B) is 1-hexene. It is especially preferred that the bimodal terpolymer is prepared in a two or more stage polymerization in which the lower alpha-olefin comonomer (e.g. 1-butene) is incorporated by a slurry polymerization in a loop reactor and in which the higher alpha-olefin comonomer (1-hexene) is incorporated by a gas phase polymerization in a gas phase reactor.

Preferably, the ethylene polymer component (A) has different, preferably higher, density than the density of the ethylene polymer component (B). The density of the ethylene polymer component (A) is preferably 925 to 950 kg/m$^3$, more preferably 930 to 945 kg/m$^3$.

Preferably, the multimodal ethylene terpolymer comprises the ethylene polymer component (A) in an amount of 30 to 70 wt.%, preferably of 40 to 60 wt.%, more preferably of 35 to 50 wt.%, more preferably 40 to 50 wt.% and the ethylene polymer component (B) in an amount of 70 to 30 wt.%, preferably of 60 to 40 wt.%, more preferably of 65 to 50 wt.%, more preferably 60 to 50 wt.%, based on the total amount (100 wt.%) of the polymer of ethylene.

Most preferably, the multimodal ethylene terpolymer consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(60 to 50).

In a particularly preferred embodiment, the multimodal terpolymer is a bimodal terpolymer, i.e. comprises a low molecular weight and a high molecular weight component, and has an MFR$_2$ of 1.0 to 1.8 g/10 min, and/or an MFR$_5$ of 2.8 to 4.5 g/10 min, and/or an MFR$_{21}$ of 20 to 36 g/10 min, and/or a density of above 925 to 929 kg/m$^3$, and/or a molecular weight distribution ($M_w/M_n$) of 3.0 to 5.0, and/or an $M_n$ of 15 to 25 kg/mol, and/or an $M_w$ of 70 to 125 kg/mol, and/or an MFR$_{21}$/MFR$_2$ ratio (FRR$_{21/2}$) of 15 to 25, and/or an MFR$_{21}$/MFR$_5$ ratio (FRR$_{21/5}$) of 6 to 9. All molecular weight parameters are determined by the GPC conventional method in standard calibration as further described in detail below.

Preferably, the component BC is present in an amount of 5 to 50 wt.%, more preferably 10 to 40 wt.% and most preferably 15 to 30 wt.%, in the core layer composition, based on the total weight of the core layer composition.

In one embodiment of the film, the core layer C is made of a core layer composition comprising, or consisting of, the components AC and BC, selected from any of the embodiments as described above.

Preferably, the component AC is present in an amount of 50 to 89 wt.%, more preferably 70 to 87 wt.%, and the component BC is present in an amount of 11 to 50 wt.%, preferably 13 to 30 wt.%, in the core layer composition, based on the total weight of the core layer composition.

Preferably, the core layer composition has a density of 940 kg/m$^3$ to 970 kg/m$^3$, more preferably 942 kg/m$^3$ to 965 kg/m$^3$ and most preferably of 945 kg/m$^3$ to 960 kg/m$^3$.

*Inner Layer I*

The inner layer I is made of an inner layer composition comprising components, which particularly contribute to heat resistance and optical properties of the film.

The inner layer I may be used as an outer surface in a laminate, which particularly contribute to the optical properties of the laminates (as print film is generally reverse printed while used in a laminate).

The selection of the ethylene polymer(s) for the inner layer enables to produce a film which is ideal for high speed printing operations, particularly for more than 250 meters/min printing speed. The inner layer of the film has very good optical properties and high heat resistance, all properties desired for printable films in packaging applications.

*Component AI*

The inner layer I of the film is made of an inner layer composition comprising 45 to 75 wt.% of a component AI, based on the total weight of the inner layer composition, wherein the component AI is an ethylene polymer having a density of above 925 kg/m$^3$ up to 940 kg/m$^3$ and a melt flow rate (MFR$_2$) in the range of 0.5 to 2.0 g/10 min, determined according to ISO 1133.

The component AI is preferably a multimodal ethylene terpolymer, more preferably a bimodal ethylene terpolymer, as described for the component BC of the core layer composition.

All embodiments described for the component BC are embodiments of the component AI. The component AI may be selected from anyone of these embodiments independently, and the selected embodiment may be the same or different for AI and BC.

The component AI is present in an amount of 45 to 75 wt.%, preferably 50 to 70 wt.%, in the inner layer composition, based on the total weight of the inner layer composition.

In addition to the component AI, the inner layer composition may comprise further components, which are different from the component AI.

*Components BI1 and BI2*

The inner layer composition may further comprise a component BI1. Preferably, the component BI1 is a high density polyethylene having a density in the range of 950 to 970 kg/m$^3$ and a melt flow rate (MFR$_2$) in the range of 0.2 to 2.0 g/10 min, determined according to ISO 1133.

The component BI1 is preferably a multimodal HDPE, more preferably a bimodal HDPE, as described for the component AC of the core layer composition.

All embodiments described for the component AC are embodiments of the component BI1. The component BI1 may be selected from anyone of these embodiments independently, and the selected embodiment may be the same or different for BI1 and AC.

The inner layer composition may further comprise a component BI2. Preferably, the component BI2 is a medium density ethylene polymer having a density in the range of 925 kg/m$^3$ to 945 kg/m$^3$ and a melt flow rate (MFR$_2$) in the range of 0.05 to 0.5 g/10 min, determined according to ISO 1133.

Component BI2 is a medium density polyethylene (MDPE) with a density of 925 to 945 kg/m$^3$. Such MDPEs are also well known in the art and are usually produced in polymerization processes using a catalyst. The MDPE of component BI2 preferably is a multimodal MDPE, more preferably bimodal MDPE. Such multimodal MDPE and their production are, for example, described in WO 2017/021389 A1, p. 8 to 10.

Preferably, the MDPE of component BI2 has a density of 930 to 940 kg/m$^3$, more preferably of 932 to 938 kg/m$^3$. Preferably, the density of the component BI2 is higher than that of component AI.

Preferably, the MDPE of component BI2 is an ethylene copolymer. The comonomer can be alpha-olefins having 4 to 12 carbon atoms, e.g. 1-butene, 4-methyl-1-pentene, 1-hexene, 1-octene, 1-decene. More preferably, the MDPE is a copolymer of ethylene and 1-butene or 1-hexene, most preferably a copolymer of ethylene and 1-butene.

Preferably, the total amount of comonomers present in the MDPE of component BI2 is of 1.0 to 4.0 mol%, more preferably of 1.5 to 3.5 mol%, and most preferably 2.0 to 3.2 mol%.

Preferably, the MDPE of component BI2 has an MFR$_2$ of 0.06 to 0.35 g/10min, more preferably of 0.08 to 0.30 g/10min, and most preferably 0.10 to 0.20 g/10min.

In a particularly preferred embodiment, the MDPE of component BI2 has an MFR$_2$ of 0.10 to 0.20 g/10 min, and/or an MFR$_5$ of 0.40 to 0.80 g/10 min and/or an MFR$_{21}$ of 10 to 20 g/10 min, and/or a density of 932 to 938 kg/m$^3$, and/or a molecular weight distribution (MWD) of 15 to 35, and/or an M$_n$ of 8 to 12 kg/mol, and/or an M$_w$ of 150 to 280 kg/mol, and/or an MFR$_{21}$/MFR$_2$ ratio (FRR$_{21/2}$) of 80 to 150, and/or an MFR$_{21}$/MFR$_5$ ratio (FRR$_{21/5}$) of 20 to 30. All molecular weight parameters are determined by the GPC conventional method in standard calibration as further described in detail below.

As the MDPE of component BI2, resin Borstar FB1350 as produced by Borealis or Borouge may be used.

In any of the above embodiments, preferably, the component BI1 and/or BI2 is present in an amount of 15 to 40 wt.%, more preferably 20 to 40 wt.%, in the inner layer composition, based on the total weight of the inner layer composition. Alternatively, both the components BI1 and BI2 taken together may be present in an amount of 15 to 40 wt.%, more preferably 20 to 40 wt.%, in the inner layer composition, based on the total weight of the inner layer composition.

*Component CI*

The inner layer composition may further comprise a component CI. Preferably, the component CI is a low density ethylene polymer (LDPE) having a density in the range of 918 kg/m$^3$ to 928 kg/m$^3$ and a melt flow rate (MFR$_2$) in the range of 1.5 to 2.5 g/10 min, determined according to ISO 1133.

LDPEs are well known in the art and are produced in high pressure process usually performed in a tubular reactor or an autoclave.

LDPEs and their production are, for example, described in WO 2017/055174, page 9, line 29 to page 12, line 6, to which it is referred.

The LDPE of the component CI preferably has a density of 918 to 928 kg/m$^3$, more preferably of 919 to 927 kg/m$^3$, and most preferably of 920 to 925 kg/m$^3$.

Preferably, the LDPE of component CI has an MFR$_2$ of 1.6 to 2.4 g/10min.

In a particularly preferred embodiment, the LDPE of component CI has an MFR$_2$ of 1.6 to 2.4, and/or a density of 920 to 925 kg/m$^3$, and/or an MWD of 5.5 to 9, and/or an M$_n$ of 12 to 18 kg/mol, and/or an M$_w$ of 80 to 130 kg/mol. All molecular weight parameters are determined by the GPC viscosity method in standard calibration as further described in detail below.

As the LDPE of component CI, resin FT6236 as produced by Borealis or Borouge may be used.

Preferably, the component CI is present in an amount of 5 to 15 wt.%, more preferably 7 to 13 wt.%, in the inner layer composition, based on the total weight of the inner layer composition.

In one embodiment, the inner layer composition comprises, or consists of, the components AI and BI1 and optionally CI in any of the above-described embodiments.

In another embodiment, the inner layer composition comprises, or consists of, the components AI and BI2 and optionally CI in any of the above-described embodiments.

In a further embodiment, the inner layer composition comprises, or consists of, the components AI, BI1 and BI2 and optionally CI in any of the above-described embodiments.

In a preferred embodiment, the inner layer composition comprises, or consists of, the component AI in an amount of 45 to 75 wt.%, any one of the component BI1 or BI2 in an amount of 25 to 40 wt.% and optionally the component CI in an amount of 0 to 15 wt.%, based on the total weight of the inner layer composition.

Preferably, the inner layer composition has a density of equal to or higher than 920 kg/m$^3$, more preferably equal to or higher than 923 kg/m$^3$.

Preferably, the density of the inner layer composition is 920 to 945 kg/m$^3$, more preferably 921 to 943 kg/m$^3$, and most preferably 924 to 940 kg/m$^3$.

The inner layer composition may have a density equal to or higher than the outer layer composition. Preferably the inner layer composition has a density of at least 1 kg/m$^3$, more preferably at least 2 kg/m$^3$ higher than the outer layer composition.

In one preferred embodiment, the inner layer composition has a density of higher than 923 kg/m$^3$, and wherein the inner layer composition has a density equal to or higher than the outer layer composition, preferably the inner layer composition has a density of at least 2 kg/m$^3$ higher than the outer layer composition.

Highly improved heat seal initiation temperature is reached when the inner layer composition comprises at least two components, such as the component AI and any of the components BI1 or B12, wherein the density of the two components differs by 5 to 35 kg/m$^3$.

### Outer Layer O

The outer layer O is made of an outer layer composition comprising components, which particularly contribute to heat resistance and optical properties of the film. The outer layer O is preferably the printable layer of the film. The outer layer O may be disposed between the core layer C and a sealant film, for example in a laminate.

### Component AO

The outer layer O is made of an outer layer composition comprising a component AO, wherein the component AO is an ethylene polymer having a density of above 925 kg/m$^3$ up to 940 kg/m$^3$ and a melt flow rate (MFR$_2$) in the range of 0.5 to 2.0 g/10 min, determined according to ISO 1133.

The component AO is preferably a multimodal ethylene terpolymer, more preferably a bimodal ethylene terpolymer, as described for the components AI and BC of the inner or core layer composition, respectively.

All embodiments described for the components AI and BC are embodiments of the component AO. The component AO may be selected from anyone of these embodiments independently, and the selected embodiment may be the same or different for AO, AI and BC.

In one embodiment, the components AO and AI and optionally BC are identical.

Preferably, the component AO is present in an amount of 45 to 75 wt.% and more preferably 50 to 70 wt.%, in the outer layer composition, based on the total weight of the outer layer composition.

In addition to the component AO, the outer layer composition may comprise further components, which are different from the component AO.

### Component BO

The outer layer composition may further comprise a component BO. Preferably, the component BO is an ethylene polymer having a density in the range of 915 kg/m$^3$ to 930 kg/m$^3$ and a melt flow rate (MFR$_2$) in the range of 0.05 to 1.0 g/10 min determined according to ISO 1133.

The component BO preferably has a lower density and/or a lower melt flow rate (MFR$_2$) than the component AO.

Preferably, the component BO is a linear low density ethylene polymer (LLDPE). Such LLDPEs are also well known in the art and are usually produced in polymerization processes using a catalyst. The LLDPE of component BO preferably is a multimodal LLDPE, more preferably bimodal LLDPE. Such multimodal LLDPE and their production are, for example, described in WO 2004/000933 A1, p. 9 to 12 to which it is referred.

The LLDPE of component BO preferably has a density of 920 to 928 kg/m$^3$, more preferably of 920 to 925 kg/m$^3$.

Preferably, the LLDPE of component BO is an ethylene copolymer. The comonomer can be alpha-olefins having 4 to 12 carbon atoms, e.g. 1-butene, 4-methyl-l-pentene, 1-hexene, 1-octene, 1-decene. More preferably, the LLDPE is a copolymer of ethylene and 1-butene or 1-hexene, most preferably is a copolymer of ethylene and 1-butene.

Preferably, the total amount of comonomers present in the LLDPE of component BO is of 2.0 to 6.0 mol%, more preferably of 2.5 to 5.5 mol%, and most preferably 3.0 to 5.2 mol%.

Preferably, the LLDPE of component BO has an MFR$_2$ of 0.1 to 0.5 g/10min, more preferably of 0.15 to 0.4 g/10min, and most preferably 0.20 to 0.30 g/10min.

In a particularly preferred embodiment, the LLDPE of component BO has an MFR$_2$ of 0.20 to 0.30 g/10 min, and/or an MFR$_5$ of 0.80 to 1.2 g/10 min, and/or an MFR$_{21}$ of 18 to 26 g/10 min, and/or a density of 920 to 925 kg/m$^3$, and/or a molecular weight distribution (MWD) of 10 to 24, and/or an M$_n$ of 10 to 15 kg/mol, and/or an M$_w$ of 150 to 250 kg/mol, and/or an MFR$_{21}$/MFR$_2$ ratio (FRR$_{21/2}$) of 80 to 110, and/or an MFR$_{21}$/MFR$_5$ ratio (FRR$_{21/5}$) of 18 to 26. All molecular weight parameters are determined by the GPC conventional method in standard calibration as further described in detail below.

As LLDPE of component BO, resin Borstar FB2230 or FB2235 as produced by Borealis or Borouge may be used.

Preferably, the component BO is present in an amount of 15 to 40 wt.%, more preferably 20 to 40 wt.%, in the outer layer composition, based on the total weight of the outer layer composition.

*Component CO*

The outer layer composition may further comprise a component CO. Preferably, the component CO is a low density ethylene polymer (LDPE) having a density in the range of 918 kg/m$^3$ to 928 kg/m$^3$ and a melt flow rate (MFR$_2$) in the range of 1.5 to 2.5 g/10 min, determined according to ISO 1133.

The component CO is preferably an LDPE, as described for the component CI of the inner layer composition.

All embodiments described for the component CI are embodiments of the component CO. The component CO may be selected from anyone of these embodiments independently, and the selected embodiment may be the same or different for CO and CI.

Preferably, the component CO is present in an amount of 5 to 15 wt.%, more preferably 7 to 13 wt.%, in the outer layer composition, based on the total weight of the outer layer composition.

In one embodiment, the outer layer composition comprises, or consists of, the components AO and BO and optionally CO in any of the above-described embodiments.

In a preferred embodiment, the outer layer composition comprises, or consists of, the component AO in an amount of 45 to 75 wt.%, the component BO in an amount of 25 to 40 wt.% and optionally the component CO in an amount of 0 to 15 wt.%, based on the total weight of the outer layer composition.

Preferably, the outer layer composition has a density of equal to or higher than 920 kg/m$^3$, more preferably equal to or higher than 923 kg/m$^3$.

Preferably, the density of the outer layer composition is 920 to 940 kg/m$^3$, more preferably 921 to 938 kg/m$^3$, and most preferably 922 to 935 kg/m$^3$

*Polyethylene Multilayered Film*

*Structure*

The polyethylene multilayered film according to the present invention comprises, or consists of, several layers, and at least an inner layer I, an outer layer O and a core layer C, wherein the core layer is located between the inner layer I and the outer layer O.

In one embodiment, the film consists of an inner layer I, an outer layer O and a core layer C. In another embodiment, the film comprises one or more further intermediate layers X.

In a particular embodiment, the film further comprises one or more intermediate layer(s) X between the core layer C and the inner layer I, and the core layer C and the outer layer O, for example in a five layer film structure O/X1/C/X2/I or a seven layer film structure O/X1/X1/C/X2/X2/I. Preferably, the film according to the invention comprises up to seven layers.

If present, the intermediate layer(s) X preferably comprise(s), or consist(s) of, a composition similar to the composition of its neighboring layer, which may thus be a composition of the core layer C or either of a composition of the neighboring inner layer I or the neighboring outer layer O.

The inner layer I and the outer layer O may be made of the same composition or of different compositions. If more than one intermediate layers X are present, they may be made of the same composition or of different compositions.

Preferably, the film has a thickness of 20 to 40 micrometer, more preferably of 21 to 38 micrometer, most preferably of 22 to 35 micrometer.

In the film according to the invention, the core layer C preferably has a thickness of 40 to 80 %, more preferably 45 to 70 % and most preferably 45 to 60 %, such as 50 %, of the total film thickness.

The inner layer I and/or the outer layer O preferably each has/have a thickness of 5 to 35 % of the total film thickness, and most preferably 10 to 30 %, such as 25 %, of the total film thickness. In a five layer film structure O/X1/C/X2/I, the inner layer I and/or the outer layer O preferably each has/have a thickness of 5 to 25 % of, more preferably of 7.5 to 20 %, of the total film thickness.

The expression "polyethylene (multilayered) film" denotes a film that comprises, or consists of, at least one type of ethylene polymer, which may be a homopolymer or a copolymer of ethylene. Preferably, the polyolefin film comprises at least 90 wt.%, more preferably at least 95 wt.% and most preferably at least 98 wt.% of ethylene polymer, based on the total weight of the polyethylene film. Preferably, the polyethylene film comprises from 90 to 100 wt.%, more preferably from 95 to 100 wt.% and most preferably from 98 to 100 wt.% of ethylene polymer, based on the total weight of the polyethylene film. Most preferably, the polyethylene film consists of only ethylene polymer(s). Preferably, ethylene polymer comprises, or consists of, ethylene homopolymer and/or copolymer of ethylene with propylene and/or any of alpha-olefins having from 4 to 10 carbon atoms. Preferably, the polyethylene film does not contain non-polyolefin polymers, preferably does not contain non-polyethylene polymers. Use of polyethylene films enables the provision of fully recyclable and sustainable packaging structures.

As is understood within the meaning of this disclosure, the polyethylene multilayered film and its respective layer compositions for layer preparation may also comprise additives such as stabilizers, processing aids and/or pigments. Examples of such additives are antioxidants, UV stabilizers, acid scavengers, nucleating agents, anti-blocking agents, slip agents etc. as well as polymer processing agents (PPA). The additives may be present in some or only in one layer of the polyethylene film, in the same or in different contents. Generally, each of the additives may be present in an amount of 0 to 5,000 ppm, based on the total weight of the respective layer composition used for the preparation of the layers of the film. The additives are generally available from several suppliers and are contained in compositions as single additive or as admixtures of two or more additives. Such compositions may generally be present in an amount of 0 to 5 wt.% in the layer composition(s), based on the weight of the respective layer composition used for the preparation of the layers of the film.

The percentage (%) is to be understood as weight percentage (wt.%) within the meaning of this disclosure, unless otherwise indicated.

Generally, polyethylene multilayered films may be provided as oriented or non-oriented films. An oriented film is a film that has been "stretched" after its production. Oriented films are typically stretched by more than 300%, in the machine direction (MD) and/or longitudinal direction (TD), preferably by 500% and more. Films stretched in machine direction are often referred to as "MDO" films. Films stretched in two directions are referred to as "bi-axially oriented polyethylene" ("BOPE") films. A non-oriented film is a blown or cast film which is not intentionally stretched after the film production (preferably, by more than 200%) by any suitable means i.e. subsequent heating and/or using the rollers during the film production.

Preferably, the polyethylene multilayered film according to the present invention is a non-oriented film.

The polyethylene multilayered film is preferably a print film, i.e. a film usable for printing operations, such as a high speed printing processes. The film may be a non-printed or printed film, i.e. comprising a print on its outer layer.

*Properties*

The film according to the invention has improved mechanical properties.

Preferably, the film has a tensile modulus (1% secant modulus) in machine direction (MD) of at least 550 MPa, more preferably at least 600 MPa. Preferably, the film has a tensile modulus (1% secant modulus) in machine direction (MD) of from 550 MPa to 1000 MPa, preferably 600 MPa to 900 MPa. The tensile modulus (1% secant modulus) in machine direction (MD) is determined according to ASTM D882.

Preferably, the film has a tensile modulus (1% secant modulus) in transverse direction (TD) of at least 650 MPa, more preferably at least 700 MPa. Preferably, the film has a tensile modulus (1% secant modulus) in transverse direction (TD) of from 650 MPa to 1200 MPa, more preferably from 700 MPa to 1000 MPa. The tensile modulus (1% secant modulus) in transverse direction (TD) is determined according to ASTM D882.

Preferably, the film has a tensile stress at break in machine direction (MD) of at least 50 MPa, more preferably at least 55 MPa. Preferably, the film has a tensile stress at break in machine direction (MD) of from 50 to 80 MPa, more preferably from 55 to 75 MPa. The tensile stress at break in machine direction (MD) is determined according to ISO 527-3.

Preferably, the film has a tensile stress at break in transverse direction (TD) of at least 30 MPa, more preferably at least 35 MPa. Preferably, the film has a tensile stress at break in transverse direction (TD) of from 30 to 60 MPa, more preferably from 35 to 50 MPa. The tensile stress at break in transverse direction (TD) is determined according to ISO 527-3.

Preferably, the film has an elongation at break in machine direction (MD) of at least 450 %, more preferably at least 480 %. Preferably, the film has an elongation at break in machine direction (MD) of from 450 to 800 %, more preferably from 480 to 750 %. The elongation at break in machine direction (MD) is determined according to ISO 527-3.

Preferably, the film has an elongation at break in transverse direction (TD) of at least 500 %, more preferably at least 550 %, such as 600 %. Preferably, the film has an elongation at break in transverse direction (TD) of from 500 to 1000 %, more preferably from 550 to 900 %. The elongation at break in transverse direction (TD) is determined according to ISO 527-3.

Preferably, the film has a tensile stress at yield in machine direction (MD) of at least 15 MPa, more preferably at least 18 MPa. Preferably, the film has a tensile stress at yield in machine direction (MD) of from 15 to 40 MPa, more preferably from 18 to 35 MPa. The tensile stress at yield in machine direction (MD) is determined according to ISO 527-3.

Preferably, the film has a tensile stress at yield in transverse direction (TD) of at least 15 MPa, more preferably at least 17 MPa. Preferably, the film has a tensile stress at yield in transverse direction (TD) of from 15 to 40 MPa, more preferably from 17 to 35 MPa. The tensile stress at yield in transverse direction (TD) is determined according to ISO 527-3.

Preferably, the film has an elongation at yield in machine direction (MD) of at least 5 %, more preferably at least 6 %. Preferably, the film has an elongation at yield in machine direction (MD) of from 5 to 30 %, more preferably from 6 to 25 %. The elongation at yield in machine direction (MD) is determined according to ISO 527-3.

Preferably, the film has an elongation at yield in transverse direction (TD) of at least 3 %, more preferably at least 4 %. Preferably, the film has an elongation at yield in transverse direction (TD) of from 3 to 20 %, more preferably from 4 to 15 %. The elongation at yield in transverse direction (TD) is determined according to ISO 527-3.

Preferably, the film has a tear strength (Elmendorf) in transverse direction (TD) of at least 6.0 N, more preferably at least 7.0 N. Preferably, the film has a tear strength (Elmendorf) in transverse direction (TD) of from 6.0 to 30.0 N, more preferably from 7.0 to 25.0 N. The tear strength (Elmendorf) in transverse direction (TD) is determined according to ASTM D 1922.

Preferably, the film has a dart drop impact (DDI) of at least 20 g, preferably at least 25 g. Preferably, the film has a dart drop impact (DDI) of from 20 to 100 g, preferably of from 25 to 90 g. The dart drop impact (DDI) is determined according to ASTM D1709 "method A".

The films having such tensile properties may withstand the high winding tension during print applications. Particularly, films having such tensile properties allow printing operations on high speed printing machines.

Preferably, the films according to the invention enable very good printing on rotogravure printing and/or flexographic printing machines.

Preferably, the film has a heat seal initiation temperature at 5 N (SIT) of at least 105 °C, preferably at least 110 °C. Preferably, the film has a heat seal initiation temperature at 5 N (SIT) of from 105 to 125 °C, preferably from 110 to 125 °C. The heat seal initiation temperature at 5 N (SIT) is determined according to ASTM F 2029 and ASTM F 88. Higher seal initiation temperature indicates an excellent heat resistance of the film and enables improved operability of the films by running on machines.

Preferably, the film has a coefficient of friction of less than 0.60, more preferably of less than 0.55. Preferably, the film has a coefficient of friction of from 0.10 to 0.50, preferably from 0.15 to 0.48. The coefficient of friction is determined according to ISO 8295 at dynamic condition (in/in or out/out).

The film according to the invention has good optical properties.

Preferably, the film has a haze value of less than 12 %, more preferably of less than 10 %. Preferably, the film has a haze value from 3 to 12 %, most preferably of from 5 to 10 %. The haze value is determined according to ASTM D1003 as a measure for the transparency of the film and the value indicates good transparency.

Preferably, the film has a gloss value of at least 80, preferably at least 85. Preferably, the film has a gloss value from 80 to 140, most preferably of from 85 to 130. The gloss value (GU) is determined at 60 ° according to ISO 2813 on the film inner or outer layer.

Preferably, the outer layer O of the film according the invention has a gloss value of at least 90, when gloss is determined at 60° according to ISO 2813, more preferably of from 95 to 140, most preferably of from 100 to 135.

Preferably, the inner layer I of the film according the invention has a gloss value of at least 80, when gloss is determined at 60° according to ISO 2813, more preferably of from 80 to 135, most preferably of from 85 to 130.

The film according to the invention has good barrier properties.

Preferably, the film has a water vapor transmission rate (WVTR) of not greater than 10 g/m$^2$/d, preferably not greater than 9 g/m$^2$/d. Preferably, the film has a water vapor transmission rate (WVTR) of from 2 to 10 g/m$^2$/d, preferably from 3 to 9 g/m$^2$/d. The water vapor transmission rate (WVTR) is determined according to ASTM F-1249, 37.8 °C, 90 % RH.

Preferably, the film has an oxygen transmission rate (OTR) of not greater than 4500 cm$^3$/m$^2$/d, preferably not greater than 4000 cm$^3$/m$^2$/d. Preferably, the film has an oxygen transmission rate (OTR) of from 1000 to 4500 cm$^3$/m$^2$/d, preferably from 1500 to 4000 cm$^3$/m$^2$/d. The oxygen transmission rate (OTR) is determined according to ASTM D-3985, 23 °C, 0 % RH.

In one embodiment, the film has a heat seal initiation temperature at 5 N (SIT) of 105 °C to 125 °C, determined according to ASTM F2029 and ASTM F88, and a tensile modulus (1 % secant) in machine direction (MD) of 550 MPa to 1000 MPa, determined according to ASTM D882, and a gloss value of at least 80, determined at 60 ° according to ISO 2813 at the surface of the inner and/or outer layer.

In a further embodiment, the film has a heat seal initiation temperature at 5 N (SIT) of 110 °C to 125 °C, determined according to ASTM F2029 and ASTM F88, and a tensile modulus (1 % secant) in machine direction (MD) of 600 MPa to 900 MPa, determined according to ASTM D882, and a gloss value of at least 85, determined at 60 ° according to ISO 2813 at the surface of the inner and/or outer layer.

*Preparation*

The multilayer polyethylene film according to the present invention is generally prepared by a conventional process, wherein the layers of the film are coextruded.

The different polymer components in any of the layers of the film are typically intimately mixed prior to layer formation, for example using a twin screw extruder, preferably a counter-rotating extruder or a co-rotating extruder. Then, the blends are converted into a coextruded film.

Preferably, the film according to the present invention can be produced by blown film or cast film process.

In order to manufacture such multilayered films, for example generally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown (co-)extrusion can be effected at a temperature in the range 150°C to 230°C, more preferably 160 °C to 225°C and cooled by blowing gas (generally air) at a temperature of 10 to 40°C, more preferably 12 to 16 °C to provide a frost line height of 0.5 to 4 times, more preferably 1 to 2 times the diameter of the die.

The blow up ratio (BUR) should generally be in the range of 1.5 to 3.5, preferably 2.0 to 3.0, more preferably 2.1 to 2.8.

The film according to the invention may also have been subjected to a stretching step, wherein the film is stretched after its. Stretching may be carried out by any conventional technique using any conventional stretching devices which are well known to those skilled in the art.

*Laminate & Article*

The invention further relates to a laminate comprising the film according to the present invention.

A laminate may be obtained by laminating the film according to the present invention to another film, such as a sealant film. This may be affected in any conventional lamination device using conventional lamination methods, such as adhesive lamination, including both solvent-based and solvent-less adhesive lamination using any conventional, commercially available adhesive. Lamination may alternatively be carried out without any adhesive, as sandwich lamination with or without a melt web, which may be pressed between the substrates. Such melt web may be any conventional melt web material based on polyethylene, such as LDPE. Lamination may further be performed via extrusion coating technique. All these lamination methods are well known in the art and described in literature.

In one embodiment, the film, preferably via its outer layer O, is laminated to a sealant film and, thus, the laminate comprises or preferably consists of the film according to the present invention and a sealant film. Preferably, the sealant film is also a polyethylene film as defined above. Use of polyethylene laminates enables the provision of fully recyclable and sustainable packaging structures.

The invention further relates to an article comprising the film according to the present invention and/or the laminate according to the present invention. Preferred articles are packaging articles such as pouches, like stand up pouches, sacks, bag, sachets, lamitubes etc.

*Use*

The invention further relates to the use of the laminate according to the present invention and/or a film according to the present invention for packaging of an article. Particularly, they may be used in form, fill and seal packaging technology or in the formation of pouches, such as stand up pouches, sacks, bags, sachets or lamitubes.

Any one of the embodiments of the invention described herein can be combined with one or more of these embodiments. Particularly, any embodiment described for the film of the invention is applicable to the laminate, the article and to the use of the film or the laminate.

In the following, the invention will further be illustrated by way of examples which refer to the figures showing:

Figure 1: Structure of the inventive PE film for high-speed printing operations.

Figure 2: Tensile strength and Tensile modulus (1% secant) both in MD (machine direction) and TD (transverse direction).

Figure 3: Heat seal initiation temperature (SIT) of the inner layer I film surface.

Figure 4: Barrier properties (WVTR and OTR).

## Measurement and Determination Methods

**a)** Measurement of melt flow rate MFR

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).
The quantity FRR (flow rate ratio) is an indication of molecular weight distribution and denotes the ratio of flow rates at different loadings. Thus, $FRR_{21/5}$ denotes the value of $MFR_{21}/MFR_5$.

**b)** Density

Density of the polymer was determined according to ISO 1183-1:2004 (method A) on compression molded specimen prepared according to EN ISO 1872-2 (Feb 2007) and is given in $kg/m^3$.

**c)** GPC

*1) GPC conventional method*

Molecular weight averages ($M_z$, $M_w$ and $M_n$), molecular weight distribution (MWD) and its broadness, described by polydispersity index, $PDI = M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.
A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As mobile phase 1,2,4-trichlorobenzene (TCB) stabilized with 250 mg/L 2,6-Di tert butyl-4-methylphenol) was used. The chromatographic system was operated at column temperature of 160 °C and detector at 160 °C and at a constant flow rate of 1 mL/min. 200 μL of sample solution was injected per analysis. Data collection was performed using either Agilent Cirrus software version 3.3 or PolymerChar GPC-IR control software.
The column set was calibrated using 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm Irgafos168 under continuous gentle shaking

*2) GPC viscosity method*

Molecular weight averages ($M_z$, $M_w$ and $M_n$), Molecular weight distribution (MWD) of LDPE is determined by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 μL of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm$^3$/g.

The column set was calibrated using universal calibration (according to ISO 16014-2:2019) with at least 15 narrow MWD polystyrene (PS) standards in the range of 0.5 kg/mol to 11 600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$\log M_1[\eta_1] = V_R = \log M_2[\eta_2]$$

with: $M_1$ Molar mass of PS
$\eta_1$ intrinsic viscosity of the PS
$M_2$ Molar mass of sample
$\eta_2$ intrinsic viscosity of sample
$V_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking.

**d)** Comonomer content

The comonomer content was determined as described in WO2019081611, pages 31 to 34.

**e)** Mechanical Properties

Tensile Modulus and Tensile Stress at break

Film tensile properties are determined at 23°C according to ISO 527-3 with a specimen Type 2 using 25 micrometer thick blown film. Tensile modulus in machine direction (MD) and tensile modulus in transverse direction (TD) were determined as 1% secant modulus with 5mm/min test speed and 50mm gauge length according to ASTM D882.

Tensile stress at break were determined according to ISO 527-3 specimen Type 2 with 50mm gauge length and 500 mm/min test speed. The film samples were produced as described below under "Examples".

Elongation at Break, Elongation at Yield, Tensile Stress at Yield

Elongation at break, elongation at break and tensile stress at yield, all in machine (MD) and transverse direction (TD), were determined according to ISO 527-3 on films with a thickness of 25 micrometer produced as described below under "Examples".

Dart Drop Impact

Dart drop impact (DDI) was determined according to ASTM D1709 "method "A" on films with a thickness of 25 micrometer produced as described below under "Examples".

**f)** Optical Properties

Gloss, clarity and haze as measures for the optical appearance of the films were determined according to ISO 2813 (gloss) and ASTM D1003 (haze and clarity) on films with thickness of 25 micrometer produced as described below under "Examples".

Gloss of the layer O and layer I was determined according to ISO 2813 at an angle of 60°. As per ISO 2813, three measurement angles (20°, 60°, and 85°) can be done by BYK-Gardner Micro-TRI-Gloss Meter and gloss values of 60° is recorded and reported as gloss units (GU). Accordingly, gloss is determined on both surfaces of the film and determined separately. Gloss of inner film layer I means gloss determined "on the film surface of inner side of film" (inner film surface), and similarly gloss of outer film layer O means gloss determined "on the film surface of outer side of film" (outer film surface).

**g)** Coefficient of friction

Coefficient of friction, both in/in and out/out, at dynamic conditions, was determined according to ISO 8295.

**h)** Seal initiation temperature (SIT)

In principle, heat seal is formed by bonding two films (polymeric) in the way that surfaces are pressed together into a close contact while being at least in partially molten. This test method also covers the evaluation part after the heat seal process is performed. The force required to separate a test strip of material containing the seal is measured using UTM (also to identify the mode of specimen failure). Following the ASTM F 2029; ASTM F 88 standard, a tested specimen with a film thickness of 25 micrometer produced as described below under "Examples" where the sealed surfaces are selected. For testing, a minimum of five specimens shall be used for each seal temperature. The term "seal initiation temperature" (SIT) is specified as the "heat seal initiation temperature at 5 N" refers to the temperature at which a seal is formed that will have a strength of 5 N after cooling. The temperature at which a heat seal forms immediately after the sealing operation (sealing time 1.0 seconds, sealing pressure 3 bar), the strength of the heat seal being measured at a specified time interval (at least 24 hrs after completion of the sealing cycle and after the seal has cooled to ambient temperature and reached maximum strength).

**i)** Water vapor transmission rate (WVTR)

Moisture vapor transmission rate of the films with a thickness of 25 micrometer produced as described below under "Examples" was determined according to ASTM F-1249 standard. The water vapor transmission rate (WVTR) test is performed as per ASTM F1249:2006 and/or ISO15106-2:2003, at 37.8 °C at 90% relative humidity (RH).

**j)** Oxygen Transmission Rate (OTR)

Oxygen barrier property, i.e. oxygen transmission rate, is determined on blown films having a thickness of 25 $\mu$m. The specimen is mounted as a sealed semibarrier between two chambers at ambient atmospheric pressure. One chamber is slowly purged by a stream of nitrogen and hydrogen gas mixture (2% $H_2$ in $N_2$) at a given temperature and relative humidity and the other chamber is purged by a stream of oxygen at the same temperature and relative humidity as the $N_2$ stream. As oxygen gas permeates through the film into the nitrogen carrier gas, it is transported to the colometric detector where it produces an electrical current, the magnitude of which is proportional to the amount of oxygen flowing into the detector per unit time. The oxygen transmission rate (OTR) test is performed as per ASTM D 3985, at 23 °C and 0% relative humidity, with using 10 sccm of $N_2/H_2$ and $O_2$ (99.999%) gases and a film surface area of 1 $cm^2$.

**k)** Thickness

Thickness of the films was determined according to ASTM D6988.

**Examples**

Multilayered films consisting of a core layer C, an inner layer I and an outer layer O were produced. The two films IE1 and IE2 are according to the invention and the other two films CE1 and CE2 are comparative examples. The inventive multilayer film properties were evaluated on large scale blown film equipment (Polyrema machinery) in comparison to reference comparative examples. The inventive films were very easy to process and exhibited good bubble stability.

The performance of the produced films were analyzed on 25 micrometer thick blown films produced at the process operating conditions as detailed below in table 3 with die-gap of 1.8 mm, lower neck-height and blow up ratio of 2.5:1.

The polymers used for making the multilayered films according to the invention and of the comparative examples are given below.

Table 1: Typical resin properties of Borstar FB2235, FB1350, FB5600, Anteo FK1828, LDPE FT6236 and MDPE1.

| Resin name | Producer | Type | MFR$_2$ (g/ 10min) | Density (kg/m³) | Slip & antiblock additives |
|---|---|---|---|---|---|
| MDPE1 | Borouge | Bimodal 1-butene,1-hexene ethylene terpolymer | 1.3 | 927 | No |
| Anteo FK1828 | Borouge | Bimodal 1-butene,1-hexene ethylene terpolymer | 1.5 | 918 | Yes |
| Borstar FB1350 | Borouge | Bimodal MDPE | 0.15 | 935 | No |
| Borstar FB2235 | Borouge | Bimodal LLDPE | 0.25 | 923 | Yes |
| Borstar FB5600 | Borouge | Bimodal 1-butene ethylene copolymer | 0.7 | 960 | No |
| FT6236 | Borouge/ Borealis | Tubular LDPE | 2.0 | 923 | Yes |
| Sabic 118W | Saudi Basic Industries Corporation (SABIC) | Unimodal LLDPE: 1-butene ethylene copolymer | 1.0 | 918 | Yes |

**Film samples**

All the polyethylene films were produced with a thickness of 25 micrometer. For all inventive examples IE 1 and IE2 and comparative examples CE1 and CE2, the thickness of the core layer C is 50% of the total thickness of the film and the thickness of each of the inner layer and outer layer is 25% of the total thickness of the film.

All inventive examples and comparative examples are non-oriented film (as per definition). The details of inventive examples and comparative examples are summarized in Table 2. The CEs and IEs are described below

- **CE-1:** Market reference film recipe, produced from Anteo FK1828 and Borstar products and Sabic 118W with small amount of LDPE in outer layer.

- **CE-2:** Another reference film recipe, produced from Anteo FK1828 and Borstar products used in the market.

- **IE-1 and IE-2:** Inventive printable substrate film samples, produced by using Borstar® FB1350, FB2235 and FB5600 along an MDPE (MDPE1) and an LDPE.

Table 2: PE film samples for use as high speed printable substrates.

| Samples | External film layer E1/outer surface (printing side) | Core Layer in the middle | External film layer E2/inner surface |
|---|---|---|---|
| Film layer | Outer layer O | Core layer C | Inner layer I |
| Thickness layer ratio | 25% | 50% | 25% |
| **CE-1** (Comparative example 1) | 80% Sabic 118W + 20% FT6236 | 30% FB2235 + 20% FB5600 + 20% FK1828 | 80% FK1828 + 20% FT6236 |
| **CE-2** (Comparative example 2) | 70% FK1820 + 30% FB2235 | 50% FB1350 + 30% FB5600 + 20% FK1828 | 70% FK1828 + 30% FB2235 |
| **IE - 1** (Inventive example 1) | 60% **MDPE1** ('AO') + 30% FB2235 ('BO') + 10% FT6236 ('CO') | 85% FB5600 ('AC') + 15% MDPE1 ('BC') | 60% **MDPE1** ('AI') + 30% **FB1350** ('BI2') + 10% FT6236 ('CI') |
| **IE-2** (Inventive example 2) | 60% **MDPE1** ('AO') + 30% FB2235 ('BO') + 10% FT6236 ('CO') | 85% FB5600 ('AC') + 15% MDPE1 ('BC') | 60% **MDPE1** ('AI') + 30% **FB5600** ('BI1') + 10% FT6236 ('CI') |

**Experimental**

The blown films made of polyethylene blends are described herein for each film layer. The polyethylene blends comprise two to three different polyethylene components, each polyethylene components having a different density and MFR.

Any polyethylene blend used in the above described print film layers can be produced by any suitable conventional multi-layer film extrusion line, preferably at a temperature of 150 to 230 °C, more preferably 160 to 225°C. Conventional blown film production techniques used in this regard, which in principle are known and available to the skilled person. Typically each film layers are coextruded at a temperature in the range of from 160 to 225 °C and cooled by blowing air at a temperature of 12 to 16 °C, to provide a frost line height of 1 or 2 times of the diameter of the die.

Blown films were produced on a Polyrema (Reifenhauser blown film line with internal bubble cooling system) having an output of 150 kgs/hr and cooling air temperature were in between 12 to 16°C. The details as listed in Table 3:

Table 3:

| Blown film line parameters | |
|---|---|
| Die diameters | 180 mm |
| Die gap | 1.8 mm |
| Blow up ratio (BUR) | 2.5 : 1 |
| Bubble cooling | IBC |
| Cooling air temperature | 14 °C |
| Corona treatment | 44 dynes |

Table 4 lists the temperature profile of the blown film line i.e., the melt temperatures used for different layers of the blown film extruders and respective melt pressure.

Table 4:

| | CE-1 | CE-2 | IE-1 | IE-2 |
|---|---|---|---|---|
| E1 layer extruder temperature Melt temperature (°C) | 194 | 196 | 212 | 212 |

(continued)

|  | CE-1 | CE-2 | IE-1 | IE-2 |
|---|---|---|---|---|
| Melt pressure (bar) | 226 | 236 | 239 | 236 |
| Core layer (C) extruder temperature | | | | |
| Melt temperature (°C) | 217 | 216 | 207 | 207 |
| Melt pressure (bar) | 284 | 316 | 272 | 274 |
| E2 layer extruder temperature | | | | |
| Melt temperature (°C) | 205 | 204 | 212 | 212 |
| Melt pressure (bar) | 217 | 234 | 246 | 211 |
| Die temperature (°C) | 215 | 215 | 215 | 215 |

The films were produced using standard co-extrusion machine for polyethylene, but each film used a slightly different process condition in order to optimize film aesthetics and deliver stable production of films. Tables 5a and 5b list the temperature profile of the blown film line, i.e. the temperatures used for different layers or the blown film extruders at different locations of the blown film line.

Table 5 a: Temperature profile (°C).

| Layer for **CE-1 and CE-2** | Extruder zone 1 | Extruder zone 2 | Extruder zone 3 | Extruder zone 4 | Extruder zone 5 | Extruder zone 6 | Post Extruder zone 7 | Post Extruder zone 8 |
|---|---|---|---|---|---|---|---|---|
| External Layer E1 | 155 | 190 | 195 | 195 | 195 | 195 | 195 | 195 |
| Core Layer C | 160 | 190 | 210 | 215 | 215 | 215 | 215 | 215 |
| External Layer E2 | 160 | 190 | 195 | 200 | 200 | 200 | 200 | 200 |
| Die (zones) | 215 | 215 | 215 | 215 | 215 | 215 | 215 | 215 |

Table 5 b: Temperature profile (°C).

| Layer for **IE-1 and IE-2** | Extruder zone 1 | Extruder zone 2 | Extruder zone 3 | Extruder zone 4 | Extruder zone 5 | Extruder zone 6 | Post Extruder zone 7 | Post Extruder zone 8 |
|---|---|---|---|---|---|---|---|---|
| External Layer E1 | 160 | 190 | 200 | 210 | 210 | 210 | 210 | 210 |
| Core Layer C | 160 | 190 | 210 | 210 | 210 | 210 | 210 | 210 |
| External Layer E2 | 160 | 190 | 200 | 210 | 210 | 210 | 210 | 210 |
| Die (zones) | 215 | 215 | 215 | 215 | 215 | 215 | 215 | 215 |

Important film properties, which play key roles, and overall performance of non-oriented PE substrate films, are described in details below:

**Film tensile properties and tensile modulus (1% secant modulus)**

The "secant modulus" is the slope of a line connecting the origin to a film's stress/strain curve at a specified strain percentage. For example, the "1% secant modulus" is the slope of a line connecting the origin to a film's stress/strain curve at 1% strain. The secant modulus describes the overall stiffness of the film. The secant modulus can be measured by straining a film in the machine direction (MD) or in the transverse direction (TD).

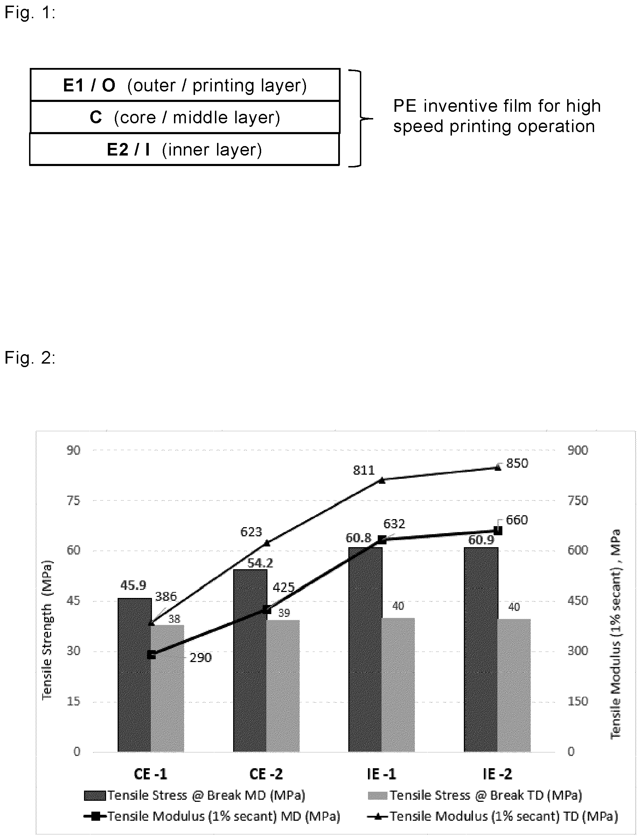

Referring to Table 6 and Figure 2, higher tensile modulus (1% secant) and also tensile strength are reported for the inventive examples, which are significantly superior over those of the comparative examples. The secant modulus at 1% (MD) is in the range of 630 to 660 MPa in the inventive examples. These high stiff polyethylene substrate films can withstand the higher line speed of rotogravure printing machine and provides excellent body to fulfil the requirements of high speed printing operation on the latest rotogravure printing machine.

Table 6: Tensile properties both in MD and TD.

| Property | Unit | CE-1 | CE-2 | IE-1 | IE-2 |
|---|---|---|---|---|---|
| Tensile Modulus (1% secant) - MD | MPa | **290** | **425** | **632** | **660** |
| Tensile Modulus (1% secant) - TD | MPa | **386** | **623** | **811** | **850** |
| Tensile Stress at break - MD | MPa | **45.9** | **54.2** | **60.8** | **60.9** |
| Tensile Stress at break - TD | MPa | 37.9 | 39.3 | 40.1 | 39.8 |
| Elongation at Break - MD | % | 485 | 499 | 590 | 550 |
| Elongation at Break - TD | % | 736 | 727 | 740 | 750 |
| Tensile Stress at Yield - MD | MPa | 16.9 | 18.5 | 21.2 | 22.1 |
| Tensile Stress at Yield - TD | MPa | 14.3 | 19.1 | 22.5 | 24.1 |
| Elongation at Yield - MD | % | 12.5 | 9.9 | 8.3 | 8.9 |
| Elongation at Yield - TD | % | 8.8 | 5.6 | 5.0 | 4.7 |

**Optical properties (Gloss and haze) and COF**

As shown in Table 7 below, the inventive examples showed a comparable gloss and acceptable haze or transparency when compared to the comparative examples. The gloss was determined at 60° as per ISO 2813 and very good gloss in both inventive examples IE-1 and IE-2 is.

IE-1 and IE-2 were specifically designed for higher heat resistance requirements, however transparency are kept within acceptable range (haze values below 10%).

COF (Coefficient of friction) of both external layers E1/O and/or E2/I are determined at dynamic condition and results are below 0.5, hence the films are most suitable for use in the subsequent printing steps.

Table 7: Gloss, Haze and COF.

| Property | Unit | CE-1 | CE-2 | IE-1 | IE-2 |
|---|---|---|---|---|---|
| **Haze** | % | **7.3** | **6.9** | **7.7** | **7.2** |
| Gloss at 60° (inner layer I) | - | 110 | 99 | 92 | 107 |
| Gloss at 60° (outer layer O) | - | 114 | 100 | 110 | 117 |
| Coefficient of Friction (in/in or I/I) | - | 0.24 | 0.35 | 0.42 | 0.43 |
| Coefficient of Friction (out/out or O/O) | - | 0.21 | 0.45 | 0.38 | 0.39 |

**Heat resistance of film (heat seal initiation temperature)**

The difference (or spread) of the densities of the polyethylene components is between about 5 kg/m$^3$ and about 35 kg/m$^3$ helps to increase the heat seal initiation temperature at 5 N (SIT) in the external layers. By increasing the density spread between the polyethylene components, SIT was found to increase along with an increase of film opticals (for haze and gloss) which is against the conventional wisdom of increasing SIT at the expense of opticals.

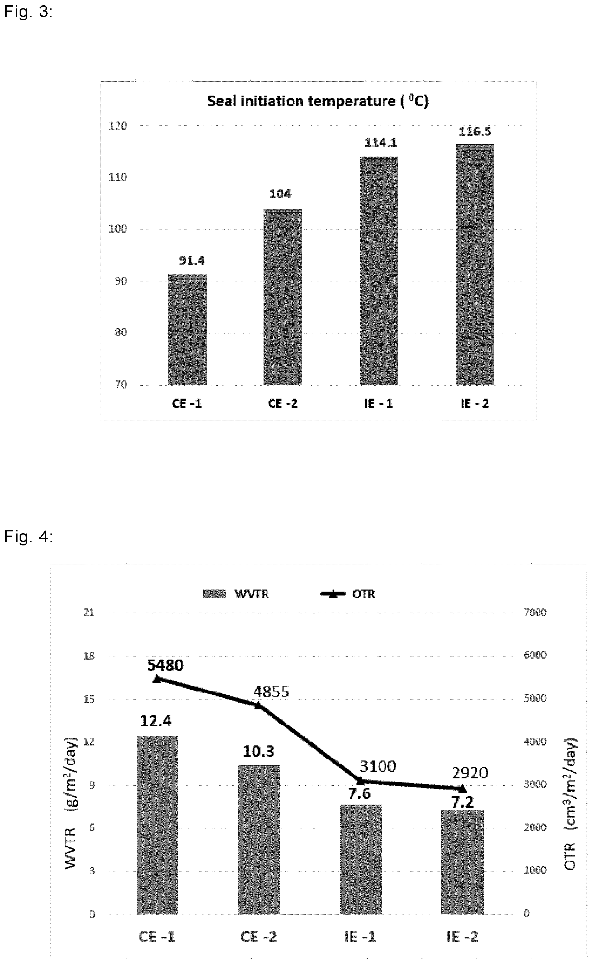

Printable PE substrate are required to resist high temperatures while passing through the various subsequent operations in high speed printing and form, fill and seal machine. As shown in Figure 3, the comparative examples have SIT value (inner layer I) in the range of 91 to 104°C.

Good heat resistance, i.e. higher seal initiation temperature up to 117 °C, is achieved in the inventive films, while maintaining good optical properties (high gloss and low haze). Overall, the inventive film structures have a heat seal initiation temperature at 5 N of more than or equal to about 110 °C.

**Film barrier performance (WVTR and OTR)**

Moisture barrier performance i.e. water vapor transmission rate (WVTR) was determined according to ASTM F-1249, 37.8 °C, 90% humidity for all the printing substrates. All the comparative examples exhibited more than 10 $g/m^2/day$ WVTR value, while this value was below 10 $g/m^2/day$ in the inventive examples. Thus, improved WVTR was reported in both of the inventive examples.

Also Oxygen transmission rate (OTR) was determined as per ASTM D3985 with standard test conditions at 23°C and 0% RH and both the inventive printing film exhibited good barrier performance (Figure 4). Thus, the films of the present invention are suitable for many packaging applications.

Table 8 provides the Tear resistance and DDI of all CE's and IE's.

Table 8:

| Property | Unit | CE-1 | CE-2 | IE-1 | IE-2 |
|---|---|---|---|---|---|
| Tear strength (Elmendorf) MD | N | 0.6 | <0.4 | <0.4 | <0.4 |
| Tear strength (Elmendorf) TD | N | 9.5 | 8.2 | 10.0 | 9.2 |
| Dart Drop Impact | g | 82 | 68 | 48 | 48 |

Both tear resistance and dart drop impact (DDI) of 25 micrometers polyethylene films are not significantly high and these results in general will not affect the performance of PE films during the high speed printing operation.

**High speed printing performance**

The print polyethylene films of Table 2 were then reverse printed on a BOBST Rotomec 4003, 10-color rotogravure printing machine. The tension between rollers in the rotogravure machine caused overstretching of conventional polyethylene films leading to poor print registration at 180 to 200 meters/min for the comparative examples. Winder tensions were optimized a little to run 25 micrometers PE films and about 4 to 6 bar was employed for smooth operation.

Comparative examples CE-1 couldn't run smoothly at >180 m/min printing speed, whereas CE-2 could run at 180 m/min but with little distorted printing artworks.

The quality of printing was excellent for inventive examples and holding capacity to perform the reverse rotogravure printing at high speed of 250 meters/min was very good. All the comparative PE examples exhibited very high stretching of films and distorted print registration while running at high speed. Moreover, conventional polyethylene print films require to reduce line speed of the machine below 180 meters/min, whereas the inventive print films do not require printing speeds to be reduced below 250 meters/min to produce the desired printing performance. Inventive PE films exhibited the requisite stiffness and print quality were acceptable, without major printing defects. Thereby the inventive PE print films achieved the desired printing performance on the high speed (≥250 meters/min) rotogravure printing machine and are suitable for further use.

This high speed printing PE substrate developed to increase the printing efficiency on latest rotogravure machine which can run at 250 meters/min line speed. The inventive high speed printing PE films can be utilized for monomaterial PE structure, which can provide fully recyclable and sustainable packaging applications.

**Claims**

1.  A polyethylene multilayered film comprising an inner layer I, an outer layer O and a core layer C, wherein the core layer C is located between the inner layer I and the outer layer O; and wherein

    a) the inner layer I is made of an inner layer composition comprising 45 to 75 wt.% of a component AI, based on the total weight of the inner layer composition, wherein the component AI is an ethylene polymer having a density of above 925 $kg/m^3$ up to 940 $kg/m^3$ and a melt flow rate ($MFR_2$) in the range of 0.5 to 2.0 g/10 min, determined according to ISO 1133;
    b) the core layer C is made of a core layer composition comprising less than 90 wt.%, preferably 50 to 85 wt.%, of a component AC, based on the total weight of the core layer composition, wherein the component AC is a high density polyethylene having a density in the range of 950 to 970 kg/m$^3$ and a melt flow rate (MFR$_2$) in the range of 0.2 to 2.0 g/10 min, determined according to ISO 1133; and

c) the outer layer O is made of an outer layer composition comprising a component AO, wherein the component AO is an ethylene polymer having a density of above 925 kg/m$^3$ up to 940 kg/m$^3$ and a melt flow rate (MFR$_2$) in the range of 0.5 to 2.0 g/10 min, determined according to ISO 1133.

2. The film according to claim 1, wherein the inner layer composition further comprises a component BI1, which is a high density polyethylene having a density in the range of 950 to 970 kg/m$^3$ and a melt flow rate (MFR$_2$) in the range of 0.2 to 2.0 g/10 min, determined according to ISO 1133, and/or a component B12, which is a medium density ethylene polymer having a density in the range of 925 kg/m$^3$ to 945 kg/m$^3$ and a melt flow rate (MFR$_2$) in the range of 0.05 to 0.5 g/10 min, determined according to ISO 1133, preferably wherein the component BI1 and/or BI2 is present in an amount of 15 to 40 wt.%, based on the total weight of the inner layer composition.

3. The film according to any one of the preceding claims, wherein the core layer composition further comprises a component BC, wherein the component BC is an ethylene polymer having a density of above 925 kg/m$^3$ up to 940 kg/m$^3$ and a melt flow rate (MFR$_2$) in the range of 0.5 to 2.0 g/10 min, determined according to ISO 1133, preferably wherein the component BC is present in an amount of 10 to 50 wt.%, based on the total weight of the core layer composition.

4. The film according to any one of the preceding claims, wherein the outer layer composition further comprises a component BO, which is an ethylene polymer having a density in the range of 915 kg/m$^3$ to 930 kg/m$^3$ and a melt flow rate (MFR$_2$) in the range of 0.05 to 1.0 g/10 min determined according to ISO 1133, preferably wherein the component BO is present in an amount of 20 to 40 wt.%, based on the total weight of the outer layer composition.

5. The film according to any one of the preceding claims, wherein the inner layer composition and/or the outer layer composition further comprises a component CI or CO, respectively, which is a low density ethylene polymer having a density in the range of 918 kg/m$^3$ to 928 kg/m$^3$ and a melt flow rate (MFR$_2$) in the range of 1.5 to 2.5 g/10 min, determined according to ISO 1133, preferably wherein the component CI and/or CO is present in an amount of 5 to 15 wt.%, based on the total weight of the inner or outer layer composition, respectively.

6. The film according to any one of the preceding claims, wherein any or all of the components AI, AO and BC is/are an ethylene terpolymer, preferably a copolymer of ethylene and at least two comonomers selected from the group consisting of C4 to C10 alpha-olefins, and/or wherein the component AO is present in an amount of 45 to 75 wt.% in the outer layer composition, based on the total weight of the outer layer composition.

7. The film according to any one of the preceding claims, wherein the polyethylene multilayered film has a heat seal initiation temperature at 5 N (SIT) of 110 °C to 125 °C, determined according to ASTM F2029 and ASTM F88, and/or a tensile modulus (1 % secant) in machine direction (MD) of 550 MPa to 1000 MPa, and/or a tensile modulus (1 % secant) in transverse direction (TD) of at least 650 MPa, determined according to ASTM D882, and/or a haze value of less than 10%, determined according to ASTM D1003, and/or a gloss value of at least 80, determined at 60 ° according to ISO 2813 at the surface of the inner and/or outer layer.

8. The film of any one of the preceding claims, wherein the film has a water vapor transmission rate (WVTR) of not greater than 10 g/m$^2$/d, determined according to ASTM F-1249, 37.8 °C, 90% RH, and/or an oxygen transmission rate (OTR) of not greater than 4500 cm$^3$/m$^2$/d, determined according to ASTM D-3985, 23 °C, 0% RH.

9. The film according to any one of the preceding claims wherein the film has a thickness of 20 to 40 $\mu$m and/or the film comprises up to seven layers and/or the film may be produced by blown film or cast film process and preferably is a non-oriented film.

10. The film according to any one of the preceding claims wherein the inner layer composition and/or the outer layer composition has a density of higher than 923 kg/m$^3$, and wherein the inner layer composition has a density equal to or higher than the outer layer composition, preferably the inner layer composition has a density of at least 2 kg/m$^3$ higher than the outer layer composition.

11. The film according to any one of the preceding claims wherein the core layer has a thickness making up 40 to 80 % of the total film thickness and/or wherein any or both of the outer layer and inner layer has/have a thickness of 10 to 30 % of the total film thickness.

12. A laminate comprising the film according to any one of the preceding claims.

13. The laminate according to claim 12, further comprising a polyethylene sealant film.

14. An article comprising the film according to any one of claims 1 to 11 or the laminate according to any one of claims 12 or 13.

15. Use of the film according to any one of claims 1 to 11 or the laminate according to any one of claims 12 or 13 for packaging of an article.

**Patentansprüche**

1. Polyethylen-Mehrschichtfolie, die eine Innenschicht I, eine Außenschicht O und eine Kernschicht C umfasst, wobei die Kernschicht C zwischen der Innenschicht I und der Außenschicht O angeordnet ist, und wobei:

   a) die Innenschicht I aus einer Innenschicht-Zusammensetzung ausgebildet ist, die 45 bis 75 Gew.-% einer Komponente AI basierend auf dem Gesamtgewicht der Innenschicht-Zusammensetzung umfasst, wobei die Komponente AI ein Ethylenpolymer mit einer Dichte über 925 kg/m$^3$ und bis zu 940 kg/m$^3$ und einer Schmelzflussrate (MFR$_2$) im Bereich von 0,5 bis 2,0 g/10 min, bestimmt gemäß ISO 1133, ist,
   b) die Kernschicht C aus einer Kernschicht-Zusammensetzung ausgebildet ist, die weniger als 90 Gew.-% und vorzugsweise 50 bis 85 Gew.-% einer Komponente AC basierend auf dem Gesamtgewicht der Kernschicht-Zusammensetzung umfasst, wobei die Komponente AC ein hochdichtes Polyethylen mit einer Dichte im Bereich von 950 bis 970 kg/m$^3$ und einer Schmelzflussrate (MFR$_2$) im Bereich von 0,2 bis 2,0 g/10 min, bestimmt gemäß ISO 1133, ist, und
   c) die Außenschicht O aus einer Außenschicht-Zusammensetzung ausgebildet ist, die eine Komponente AO umfasst, wobei die Komponente AO ein Ethylenpolymer mit einer Dichte über 925 kg/m$^3$ und bis zu 940 kg/m$^3$ und einer Schmelzflussrate (MFR$_2$) im Bereich von 0,5 bis 2,0 g/10 min, bestimmt gemäß ISO 1133, ist.

2. Folie nach Anspruch 1, wobei die Innenschicht-Zusammensetzung weiterhin eine Komponente BI1, die ein hochdichtes Polyethylen mit einer Dichte im Bereich von 950 bis 970 kg/m$^3$ und einer Schmelzflussrate (MFR$_2$) im Bereich von 0,2 bis 2,0 g/10 min, bestimmt gemäß ISO 1133 ist, und/oder eine Komponente BI2, die ein mitteldichtes Polyethylen mit einer Dichte im Bereich von 925 kg/m$^3$ bis 945 kg/m$^3$ und einer Schmelzflussrate (MFR$_2$) im Bereich von 0,05 bis 0,5 g/10 min, bestimmt gemäß ISO 1133, ist, umfasst, wobei die Komponente BI1 und/oder die Komponente BI2 mit einem Anteil von 15 bis 40 Gew.-% basierend auf dem Gesamtgewicht der Innenschichtzusammensetzung vorgesehen sind.

3. Folie nach einem der vorstehenden Ansprüche, wobei die Kernschichtzusammensetzung weiterhin eine Komponente BC umfasst, wobei die Komponente BC ein Ethylenpolymer mit einer Dichte von über 925 kg/m$^3$ und bis zu 940 kg/m$^3$ und einer Schmelzflussrate (MFR$_2$) im Bereich von 0,5 bis 2,0 g/10 min, bestimmt gemäß ISO 1133, ist, wobei vorzugsweise die Komponente BC mit einem Anteil von 10 bis 50 Gew.-% basierend auf dem Gesamtgewicht der Kernschichtzusammensetzung vorgesehen ist.

4. Folie nach einem der vorstehenden Ansprüche, wobei die Außenschichtzusammensetzung weiterhin eine Komponente BO umfasst, die ein Ethylenpolymer mit einer Dichte im Bereich von 915 kg/m$^3$ bis 930 kg/m$^3$ und einer Schmelzflussrate (MFR$_2$) im Bereich von 0,05 bis 1,0 g/10 min, bestimmt gemäß ISO 1133, ist, wobei vorzugsweise die Komponente BO mit einem Anteil von 20 bis 40 Gew.-% basierend auf dem Gesamtgewicht der Außenschichtzusammensetzung vorgesehen ist.

5. Folie nach einem der vorstehenden Ansprüche, wobei die Innenschichtzusammensetzung und/oder die Außenschichtzusammensetzung weiterhin eine Komponente CI oder CO umfassen, die jeweils ein niederdichtes Ethylenpolymer mit einer Dichte im Bereich von 918 kg/m$^3$ bis 928 kg/m$^3$ und einer Schmelzflussrate (MFR$_2$) im Bereich von 1,5 bis 2,5 g/10 min, bestimmt gemäß ISO 1133, sind, wobei vorzugsweise die Komponente CI und/oder die Komponente CO mit einem Anteil von 5 bis 15 Gew.-% basierend auf dem Gesamtgewicht jeweils der Innen- oder Außenschichtzusammensetzung vorgesehen sind.

6. Folie nach einem der vorstehenden Ansprüche, wobei einige oder alle der Komponenten AI, AO und BC ein Ethylenterpolymer und vorzugsweise ein Copolymer von Ethylen und wenigstens zwei Comonomeren, die aus der aus C4 bis C10 Alphaolefinen bestehenden Gruppe ausgewählt sind, sind und/oder wobei die Komponente AO mit einem Anteil von 45 bis 75 Gew.-% in der Außenschichtzusammensetzung basierend auf dem Gesamtgewicht der Außenschichtzusammensetzung vorgesehen ist.

7. Folie nach einem der vorstehenden Ansprüche, wobei die Polyethylen-Mehrschichtfolie eine Heißversiegelung-Initiierungstemperatur bei 5 N (SIT) von 110°C bis 125°C, bestimmt gemäß ASTM F2029 und ASTM F88, und/oder ein Zugmodul (1 % Sekante) in einer Maschinenrichtung (MD) von 550 MPa bis 1000 MPa und/oder ein Zugmodul (1 % Sekante) in einer Querrichtung (TD) von wenigstens 650 MPa, bestimmt gemäß ASTM D882, und/oder einen Trübungswert von weniger als 10%, bestimmt gemäß ASTM D1003, und/oder einen Glanzwert von wenigstens 80, bestimmt bei 60°C gemäß ISO 2813, auf der Oberfläche der Innen- und/oder Außenschicht aufweist.

8. Folie nach einem der vorstehenden Ansprüche, wobei die Folie eine Wasserdampfdurchlassrate (WVTR) von nicht mehr als 10 g/m$^2$/d, bestimmt gemäß ASTM F-1249, 37,8°C, 90% RH und/oder eine Sauerstoffdurchlassrate (OTR) von nicht mehr als 4500 cm$^3$/m$^2$/d, bestimmt gemäß ASTM D-3985, 23°C, 0% RH aufweist.

9. Folie nach einem der vorstehenden Ansprüche, wobei die Folie eine Dicke von 20 bis 40 $\mu$m aufweist und/oder die Folie bis zu sieben Schichten umfasst und/oder die Folie durch einen Blasfolien- oder Gießfolienprozess hergestellt werden kann und vorzugsweise eine nicht-ausgerichtete Folie ist.

10. Folie nach einem der vorstehenden Ansprüche, wobei die Innenschichtzusammensetzung und/oder die Außenschichtzusammensetzung eine Dichte von höher als 923 kg/m$^3$ aufweist und wobei die Innenschichtzusammensetzung eine Dichte gleich oder höher als diejenige der Außenschichtzusammensetzung aufweist, wobei vorzugsweise die Innenschichtzusammensetzung eine Dichte, die wenigstens 2 kg/m$^3$ höher als diejenige der Außenschichtzusammensetzung ist, aufweist.

11. Folie nach einem der vorstehenden Ansprüche, wobei die Kernschicht eine Dicke, die 40 bis 80 % der Gesamtfoliendicke ausmacht, aufweist und/oder wobei die Außenschicht und/oder die Innenschicht eine Dicke von 10 bis 30 % der Gesamtfoliendicke aufweisen.

12. Laminat, das die Folie gemäß einem der vorstehenden Ansprüche umfasst.

13. Laminat nach Anspruch 12, das weiterhin eine Polyethylen-Abdichtungsfolie umfasst.

14. Artikel, der die Folie gemäß einem der Ansprüche 1 bis 11 oder das Laminat gemäß Anspruch 12 oder 13 umfasst.

15. Verwendung der Folie gemäß einem der Ansprüche 1 bis 11 oder des Laminats gemäß Anspruch 12 oder 13 für das Verpacken eines Artikels.

**Revendications**

1. Film multicouche en polyéthylène comprenant une couche intérieure I, une couche extérieure O et une couche centrale C, dans lequel la couche centrale C est située entre la couche intérieure I et la couche extérieure O ; et dans lequel

    a) la couche intérieure I est faite d'une composition de couche intérieure comprenant 45 à 75 % en poids d'un composant AI, par rapport au poids total de la composition de couche intérieure, le composant AI étant un polymère d'éthylène ayant une densité de plus de 925 kg/m$^3$ jusqu'à 940 kg/m$^3$ et un taux de fluidité à chaud (MFR$_2$) dans la plage allant de 0,5 à 2,0 g/10 min, déterminé conformément à la norme ISO 1133 ;
    b) la couche centrale C est faite d'une composition de couche centrale comprenant moins de 90 % en poids, de préférence 50 à 85 % en poids, d'un composant AC, sur la base du poids total de la composition de couche centrale, le composant AC étant un polyéthylène haute densité ayant une densité dans la plage allant de 950 à 970 kg/m$^3$ et un taux de fluidité à chaud (MFR$_2$) dans la plage allant de 0,2 à 2,0 g/10 min, déterminé conformément à la norme ISO 1133 ; et
    c) la couche extérieure O est faite d'une composition de couche extérieure comprenant un composant AO, le composant AO étant un polymère d'éthylène ayant une densité de plus de 925 kg/m$^3$ à 940 kg/m$^3$ et un taux de fluidité à chaud (MFR$_2$) dans la plage allant de 0,5 à 2,0 g/10 min, déterminé conformément à la norme ISO 1133.

2. Film selon la revendication 1, dans lequel la composition de couche intérieure comprend en outre un composant BI1, qui est un polyéthylène haute densité ayant une densité dans la plage allant de 950 à 970 kg/m$^3$ et un taux de fluidité à chaud (MFR$_2$) dans la plage allant de 0,2 à 2,0 g/10 min, déterminé conformément à la norme ISO 1133, et/ou un composant B12, qui est un polymère d'éthylène de densité moyenne ayant une densité dans la plage allant de 925 kg/m$^3$ à 945 kg/m$^3$ et un taux de fluidité à chaud (MFR$_2$) dans la plage allant de 0,05 à 0,5 g/10 min, déterminé conformément à la norme ISO 1133, de préférence dans lequel les composants BI1 et/ou BI2 sont présents en une quantité de 15 à 40 % en poids, par rapport au poids total de la composition de la couche intérieure.

3. Film selon l'une quelconque des revendications précédentes, dans lequel la composition de couche centrale comprend en outre un composant BC, le composant BC étant un polymère d'éthylène ayant une densité de plus de 925 kg/m$^3$ jusqu'à 940 kg/m$^3$ et un taux de fluidité à chaud (MFR$_2$) dans la plage allant de 0,5 à 2,0 g/10 min, déterminé selon ISO 1133, de préférence le composant BC étant présent en une quantité de 10 à 50 % en poids, sur la base du poids total de la composition de couche centrale.

4. Film selon l'une quelconque des revendications précédentes, dans lequel la composition de couche extérieure comprend en outre un composant BO, qui est un polymère d'éthylène ayant une densité dans la plage allant de 915 kg/m$^3$ à 930 kg/m$^3$ et un taux de fluidité à chaud (MFR$_2$) dans la plage allant de 0,05 à 1,0 g/10 min déterminé conformément à la norme ISO 1133, de préférence le composant BO étant présent en une quantité de 20 à 40 % en poids, sur la base du poids total de la composition de couche extérieure.

5. Film selon l'une quelconque des revendications précédentes, dans lequel la composition de couche intérieure et/ou la composition de couche extérieure comprend en outre un composant CI ou CO, respectivement, qui est un polymère d'éthylène de faible densité ayant une densité dans la plage allant de 918 kg/m$^3$ à 928 kg/m$^3$ et un taux de fluidité à chaud (MFR$_2$) dans la plage allant de 1,5 à 2,5 g/10 min, déterminé conformément à la norme ISO 1133, de préférence les composants CI et/ou CO étant présents en une quantité de 5 à 15 % en poids, par rapport au poids total de la composition de couche intérieure ou de couche extérieure, respectivement.

6. Film selon l'une quelconque des revendications précédentes, dans lequel l'un quelconque des ou tous les composants Al, AO et BC est/sont un terpolymère d'éthylène, de préférence un copolymère d'éthylène et d'au moins deux comonomères choisis dans le groupe constitué par les alphaoléfines en C4 à C10, et/ou dans lequel le composant AO est présent en une quantité de 45 à 75 % en poids dans la composition de couche extérieure, sur la base du poids total de la composition de couche extérieure.

7. Film selon l'une quelconque des revendications précédentes, dans lequel le film multicouche en polyéthylène présente une température d'amorçage du thermoscellage à 5 N (SIT) de 110 °C à 125 °C, déterminée conformément aux normes ASTM F2029 et ASTM F88, et/ou un module de traction (1 % sécant) dans le sens machine (MD) de 550 MPa à 1 000 MPa, et/ou un module de traction (1 % sécant) dans le sens transversal (TD) d'au moins 650 MPa, déterminé conformément la norme ASTM D882, et/ou une valeur de trouble inférieure à 10 %, déterminée conformément à la norme ASTM D1003, et/ou une valeur de brillance d'au moins 80, déterminée à 60° conformément la norme ISO 2813 à la surface de la couche intérieure et/ou extérieure.

8. Film selon l'une quelconque des revendications précédentes, dans lequel le film a un taux de transmission de la vapeur d'eau (WVTR) ne dépassant pas 10 g/m$^2$/j, déterminé selon la norme ASTM F-1249, 37,8 °C, 90 % HR, et/ou un taux de transmission de l'oxygène (OTR) ne dépassant pas 4 500 cm$^3$/m$^2$/j, déterminé conformément à la norme ASTM D-3985, 23 °C, 0 % HR.

9. Film selon l'une quelconque des revendications précédentes, dans lequel le film a une épaisseur de 20 à 40 μm et/ou le film comprend jusqu'à sept couches et/ou le film peut être produit par un procédé de film soufflé ou de film coulé et est de préférence un film non orienté.

10. Film selon l'une quelconque des revendications précédentes, dans lequel la composition de couche intérieure et/ou la composition de couche extérieure a une densité supérieure à 923 kg/m$^3$, et dans lequel la composition de la couche intérieure a une densité égale ou supérieure à la composition de couche extérieure, de préférence la composition de couche intérieure a une densité supérieure d'au moins 2 kg/m$^3$ à celle de la composition de couche extérieure.

11. Film selon l'une quelconque des revendications précédentes, dans lequel la couche centrale a une épaisseur représentant 40 à 80 % de l'épaisseur totale du film et/ou dans lequel l'une quelconque des ou les deux couches extérieure et intérieure ont une épaisseur de 10 à 30 % de l'épaisseur totale du film.

12. Stratifié comprenant le film selon l'une quelconque des revendications précédentes.

13. Stratifié selon la revendication 12, comprenant en outre un film d'étanchéité en polyéthylène.

14. Article comprenant le film selon l'une quelconque des revendications 1 à 11 ou le stratifié selon l'une quelconque des revendications 12 et 13.

15. Utilisation du film selon l'une quelconque des revendications 1 à 11 ou du stratifié selon l'une quelconque des revendications 12 et 13 pour l'emballage d'un article.

Fig. 1:

| E1 / O  (outer / printing layer) |
| C  (core / middle layer) |
| E2 / I  (inner layer) |

PE inventive film for high speed printing operation

Fig. 2:

Fig. 3:

Seal initiation temperature ( $^0$C)

Fig. 4:

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018187438 A
- EP 2578395 A1
- WO 2021070198 A1
- US 2018104942 A1
- WO 2019005930 A1
- WO 2020109289 A
- WO 2016083208 A
- WO 2017021389 A1
- WO 2017055174 A
- WO 2004000933 A1
- WO 2019081611 A